# EUROPEAN PATENT APPLICATION

(11) **EP 1 564 872 A2**
(43) Date of publication of application: **17.08.2005**
(21) Application number: 05250787.8
(22) Date of filing: 11.02.2005
(51) Int. Cl.: H02K 19/10, H02K 1/14

(54) **Magnetic circuits of electrical machines**

(30) Priority: 16.02.2004 GB 0403395
(71) Applicant: SWITCHED RELUCTANCE DRIVES LIMITED, Harrogate, North Yorkshire HG3 1PR (GB)
(72) Inventor: McClelland, Michael Leo, Calverley, Leeds LS28 5PR (GB)
(74) Representative: Hale, Peter

(57) **Abstract**

An electrical machine is provided with one or more flux plates at the end of the stator and rotor cores. On the stator side, the plate is profiled to substantially fill the void between the core and the winding. The plates are ferromagnetic and form part of the main magnetic circuit. They carry maximum flux at zero and low switching frequencies and substantially no flux at the highest operating speeds.

## Description

This invention relates to improvements in the magnetic circuits of electrical machines. It is particularly suitable for those machines with salient poles, for example, switched reluctance machines.

The control and operation of switched reluctance machines generally are described in the paper "The Characteristics, Design and Applications of Switched Reluctance Motors and Drives" by J. M. Stephenson and R. J. Blake delivered at the PCIM'93 Conference and Exhibition held in Nurnberg, Germany, 21-24 June 1993, which is incorporated herein by reference. In that paper the "chopping" and "single-pulse" modes of energisation of switched reluctance machines are described for operation of the machine at low and high speeds, respectively.

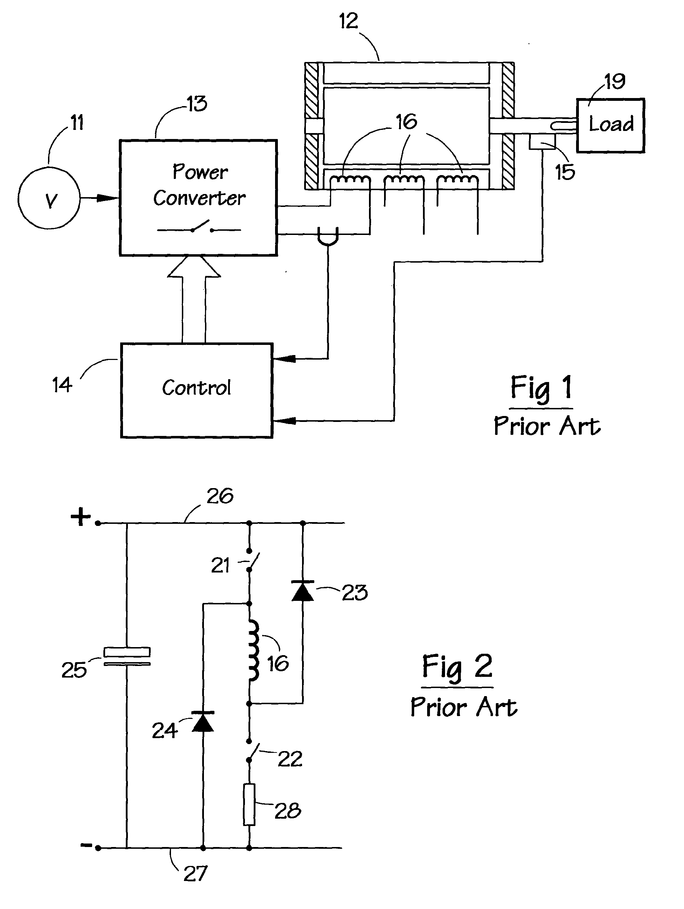

A typical prior art switched reluctance drive is shown schematically in Figure 1. This includes a DC power supply 11 that can be either a battery or rectified and filtered AC mains. The DC voltage provided by the power supply 11 is switched across phase windings 16 of the motor 12 by a power converter 13 under the control of the electronic control unit 14. The rotor and stator are typically radially laminated magnetisable steel, i.e. the plane of the laminations is radial with respect to the axis of the machine. However, some machines are made up of axial laminations in which the plane of each lamination is parallel with the axis of the machine. One of the many known converter topologies is shown in Figure 2, in which the phase winding 16 of the machine is connected in series with two switching devices 21 and 22 across the busbars 26 and 27. Busbars 26 and 27 are collectively described as the "DC link" of the converter. Energy recovery diodes 23 and 24 are connected to the winding to allow the winding current to flow back to the DC link when the switches 21 and 22 are opened. A capacitor 25, known as the "DC link capacitor", is connected across the DC link to source or sink any alternating component of the DC link current (i.e. the so-called "ripple current") which cannot be drawn from or returned to the supply. In practical terms, the capacitor 25 may comprise several capacitors connected in series and/or parallel and, where parallel connection is used, some of the elements may be distributed throughout the converter. A resistor 28 is connected in series with the lower switch 22 to provide a current feedback signal. A multiphase system typically uses several "phase legs" of Figure 2 connected in parallel to energise the phases of the electrical machine.

Detection of rotor position is conventionally achieved by using a transducer 15, shown schematically in Figure 1, such as a rotating toothed disk mounted on the machine rotor, which co-operates with an optical, magnetic or other sensor mounted on the stator. A signal, e.g. a pulse train, indicative of rotor position relative to the stator is generated by the sensor and supplied to control circuitry, allowing accurate phase energisation.

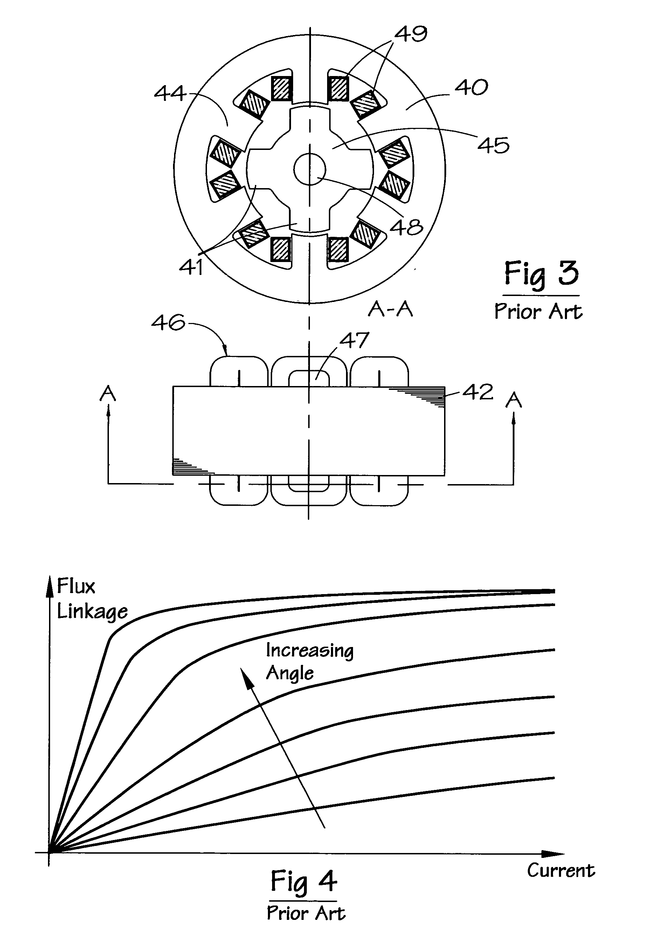

A characteristic of some electrical machines, notably brushless dc and switched reluctance machines, is that they have salient poles on at least one member. For example, the stator lamination 40 and rotor lamination 45 shown in Figure 3 are suitable for a switched reluctance machine. The stator lamination has salient poles 44. A quantity of identical stator laminations make up the stator core 42. The coils 49 are assembled to the stator core, either by sliding pre-wound coils onto the poles or by winding the coils directly onto the poles. In the assembled state the winding extends along each pole side (perpendicular to the plane of section A-A in Figure 3) and around each pole end between the sides. The coils typically have an overhang portion 46 outside the core where the conductors bend in at least one plane around the pole end to connect the two coil sides together. Because of the constraints on minimum bending radius of conductors, there is usually a gap 47 between the inside of the coil overhang and the core at the pole end.

The rotor lamination also has salient poles 41, but these are typically not wound. The identical rotor laminations are stacked to form a core pack and generally mounted on a shaft 48 which is mounted in bearings (not shown). The rotor core pack is typically the same length as the stator core pack within manufacturing tolerances.

It is well known that the numbers of poles used on both stator and rotor laminations are a function of different parameters of the design, e.g. the number of phases in the system, the speed of the drive, the torque profile, etc.

Electrical machines in general are constructed from laminations of magnetisable electrical sheet steel. The resulting structure is used to carry the magnetic flux on which the machine depends for its operation. The structure is laminated to reduce the effect of eddy currents, which flow in the steel due to the time rate of change of the flux. Usually only machines with unvarying flux have unlaminated structures. For example, the field structure of a dc machine can be unlaminated (i.e. solid), though even in these machines a laminated structure is sometimes adopted in order to improve the transient response for a new operating condition. The degree of lamination is usually determined by the frequency of flux variation in the machine. For example, in a machine energised directly from the 50 or 60Hz mains supply and operating at, say, 1500 or 1800 rev/min, a lamination thickness of 0.50 or 0.65mm is often adopted. For a machine operating on a 400Hz supply and running at 10,000 rev/min, a lamination thickness of 0.20mm is typical.

Of course, the decreasing lamination thickness brings many disadvantages, not least in terms of cost of material and of manufacturing difficulty. However, the designer is usually prepared to accept these disadvantages in order to realise the benefits of reduced eddy current loss, higher efficiency and higher specific machine output.

The output of the machine is also dependent on the so-called magnetising characteristic of the steel used. This is the relationship between the magnetising effort applied to the steel (i.e. the magneto motive force, mmf) and the flux consequently produced. While there is a range of grades of steel from which the designer can choose, all of them have the same general feature in that the initial, generally linear, relationship between mmf and flux gradually deteriorates with increasing mmf to the point of significant non-linearity. In practical terms, this represents a limit on the amount of flux that the steel can usefully carry - a state generally described as "saturated", though this is not a particularly descriptive term, as there is no sharp cut-off in the relationship.

This magnetising characteristic of the steel becomes inseparably blended with the ideal characteristics of any machine in which the steel is used. For example, in a switched reluctance machine, the ideal inductance profile discussed in the Stephenson paper above is significantly modified by the steel characteristics. This can be seen in the flux-linkage/angle/current relationships shown in Figure 4, where the non-linearity of flux with current is evident.

In general, the designers of electrical machines are encouraged to design smaller and less costly machines to meet ever more demanding performance specifications. Size is important because it generally relates to both weight and cost. These are parameters which are important in the fields of, for example, aerospace and automobiles where fuel consumption is increasingly regarded as a major issue. Initially, reducing the size for a given performance is simply achieved by working the steel harder, i.e. making it carry more flux in a given volume. Inspection of the curves of Figure 4, however, shows that this results in a non-linear increase in the mmf, resulting in a non-linear increase in the resistive losses of the machine and therefore in the thermal management problems associated with cooling. There is likely to be a consequential increase in the cost of the power converter for the machine. Thus there is clearly a practical limit that applies to the specific output of the machine.

In many applications for electrical machines, there is a need for very high torque at low speed, the required torque being several times that of the nominal full load. This can arise in, for example, machine tools with high stiction loads, actuator devices in aerospace applications, or starting devices for internal combustion engines. This low-speed torque requirement is often coupled with the need to operate at much greater speeds, albeit at somewhat lower torques. In order to meet this requirement, it has hitherto been necessary to drive the machine well into the non-linear region, i.e. to operate well over the "knee" point of the curves of Figure 4. The concomitant increase in current degrades the thermal performance, greatly limiting the length of time for which the machine can produce the required torque. There is a further potential problem in that the extra current requirement may necessitate an increase in the capacity of the supply, especially if the supply is a battery or other form of limited energy storage device.

There is a need for a method of increasing the ability of a given volume of machine to provide more output without affecting its thermal performance.

The present invention is defined in the accompanying claims. Some preferred features are recited in the dependent claims.

The invention provides, in one embodiment, a stator for an electrical machine, comprising a core defining at least one stator pole having end faces, and at least one coil embracing the at least one stator pole, a surface of the coil and at least one of the end faces defining a space, the stator further comprising a magnetisable flux plate having a projecting portion at least partially occupying the space.

Preferably, the projecting portion has a lateral profile generally conforming to the profile of the pole. This maximises the flux carrying capability of the flux plate. A solid flux plate can be formed to fill the space. Alternatively, the flux plate can be made of laminations which generally conform to the shape of the space. The thickness of the projecting portion of the flux plate is usually influenced by the bend radius of the coil around the pole end face.

The flux plate may have a profile that is the same as that of the stator core. The edge of the profile of the flux plate may define an outer margin at the end of the core at least in the region of the pole sides or be coincident with the end of the core.

The core may comprise laminations which each define the profile of the stator, the flux plate being thicker than the laminations of the core. Typically the laminations are made of magnetisable steel, as referred to above. The flux plate is usually between 3 and 10 times the thickness of a lamination depending on the space to be filled.

According to another embodiment as assembly comprises a stator as defined and a movable member comprising laminations and a further or alternative flux plate having a similar profile to that of the member. The profile of the flux plate may be undersized with respect to some or all of the corresponding profile of the lamination, thereby defining an outer margin at the edge of the core.

Commonly, the machine is a rotary machine (for example a variable reluctance machine), but other embodiments may take the form of a linear machine.

The cores may be made up of radial laminations, the flux plate being axially thicker than the laminations of either core.

Embodiments of the invention include an electrical machine assembly comprising a movable member (e.g. a rotor) and a stator as defined. In one particular form, the flux plate of the movable member and/or the stator can be arranged, in use, to carry flux alongside (i.e. geometrically generally parallel to) the flux path through the stator core and the movable member.

In a further embodiment the invention is a method of increasing the flux carrying capacity of an electrical machine which comprises a stator made of laminations of magnetisable material of a first thickness, and a rotor made of laminations of magnetisable material of a second thickness, the method comprising: arranging at least one magnetisable flux plate against the laminations of one or both of the stator and rotor, which flux plate has a profile which is similar to the lamination against which it is arranged, and has a thickness which is greater than that of the lamination, the flux plate being arranged to carry flux alongside the flux path through the rotor and stator.

Preferably, the stator comprises a core defining at least one stator pole having end faces, and at least one coil embracing the at least one stator pole, the method further comprising at least partially occupying a space between a surface of the coil and at least one of the end faces with a projecting portion of the flux plate.

Preferably, the flux plates are arranged adjacent laminations of the stator and rotor, the method further comprising aligning the flux plates so that the flux carried by the flux plates is in parallel with the flux through the rotor and stator.

Preferably, the flux plates are arranged adjacent laminations of the stator and rotor, the method further comprising arranging one of the flux plates to overlap the other.

The invention can be put into practice in a number of ways, some of which will now be described by way of example and with reference to the accompanying drawings in which:
Figure 1 shows a typical prior art switched reluctance drive;
Figure 2 shows a known topology of one phase of the converter of Figure 1;
Figure 3 shows a schematic drawing of a stator and rotor of an electrical machine;
Figure 4 shows typical flux-linkage and phase current curves, with rotor position as a parameter, for a switched reluctance machine;
Figure 5 shows views of a stator flux plate;
Figure 6 shows an exploded view of an electrical machine with flux plates;
Figure 7 shows views of a rotor flux plate;
Figure 8 illustrates an alternative embodiment; and
Figure 9 is a detail of a flux path between stator and rotor.

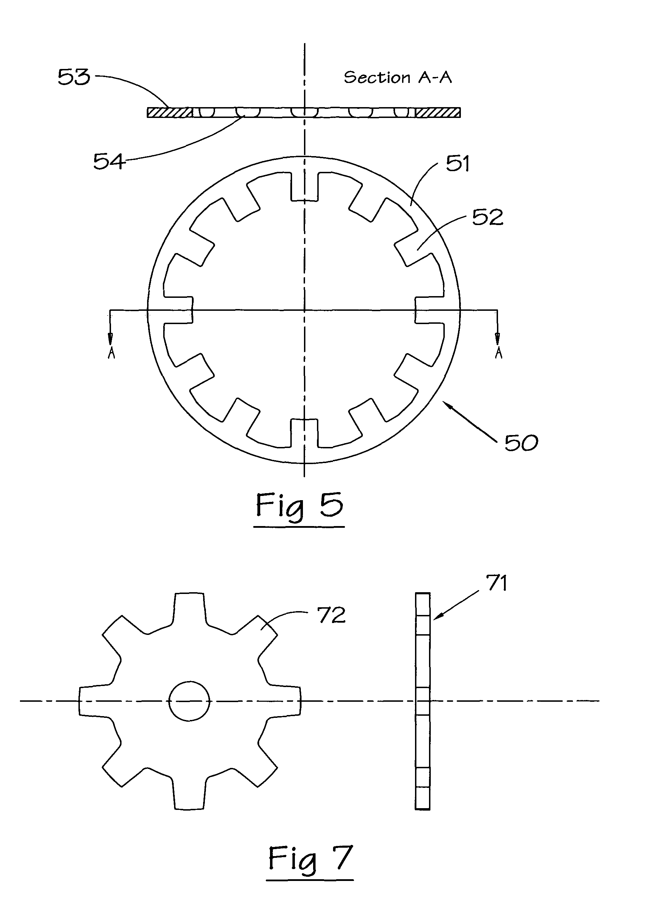

Figure 5 shows a stator flux plate which is shaped to co-operate with the end of a stator core pack having a stator back-iron portion, and poles having pole sides and pole ends, as shown in Figure 3, for example. A solid flux plate 50 has an annular portion 51, whose inside and outside diameters correspond to the back-iron portion of the stator lamination. A number of teeth 52 project radially inwardly from the annular portion. Each tooth 52 has dimensions which allow the tooth to match the shape of the stator poles 44, or to lie slightly inside the profile of the pole. The number of teeth on the flux plate is the same as the number of stator poles. The cross section of the plate shows it has a flat side 53 which lies adjacent the end face of the stack of magnetisable laminations making up the stator core 42. The opposite side 54 of the plate is profiled at the teeth to match the profile of the gap 47 (see Figure 3) created between the coil overhang 46 and the pole end. Figure 5 shows a flux plate 50 with twelve teeth, suitable for use with the twelve-pole stator 61 shown in Figure 6. The shape of the flux plate 50 is the same as the shape of the axial profile of the stator core. However, while the flux plate and the stator core may be similarly dimensioned in axial profile, the profile of the flux plate may be generally slightly less so that the difference between the two profiles defines a margin. For example, on a machine with a stator core of 100mm outside diameter, the margin may be between 0.1mm and 0.7mm, for example 0.5mm.

Figure 6 shows an exploded schematic of an electrical machine with a stator core 61 having two flux plates 50. The plates 50 are fitted to the ends of the core 61 before the coils 49 are assembled to or wound on the core, so that the teeth 52 of each flux plate are encircled by the overhangs of the coils. The flat face 53 of each flux plate is arranged against the end of the core.

Like the laminations, each flux plate is made of unlaminated ferromagnetic material. Each is continuous across its radial profile. The material is chosen for its flux-carrying qualities and for its suitability to be machined, cast, stamped or forged with the appropriate profile on the teeth, rather than for any qualities of mechanical strength. A suitable material for some applications is steel type EN9.

Figure 7 shows a corresponding rotor flux plate 71, which has a number of teeth 72 corresponding to the number of poles on the rotor 45. Since the rotor carries no winding in this example, the outer surface of the teeth 72 need not be profiled across their width, but can have a rectangular form. This is simpler to manufacture than the profiled teeth of the stator flux plate 50. The rotor flux plate 71 is assembled to one or both ends of the rotor core pack 60, so that its position aligns axially with the corresponding stator flux plate. The material for the rotor flux plates is chosen according to the criteria also used for the stator flux plates, with the additional criterion that the material also requires sufficient mechanical strength to withstand centrifugal forces developed when the machine is operating. Again, the axial profile of the rotor flux plate may be defined to the same as the profile of the rotor lamination itself. However, the equivalent margin between profiles as described in relation to the stator may be defined in the region of the rotor poles or throughout. As with the stator flux plate, the rotor flux plate is continuous across its profile.

As a practical matter, the rotor flux plate can be formed with a circular axial recess which will provide clearance for a rotor bearing on the rotor shaft and/or a bearing housing on the fixed member. Indeed, this invention finds particular application in motors for confined spaces in which the flux carrying capacity of the machine for a given size has to be enhanced as much as possible. Thus, it can be advantageous to sacrifice a certain amount of flux carrying capacity in the flux plate for the sake of mechanical compactness by providing clearance for the rotor and/or its housing.

When a phase is energised according to the general principles discussed in the Stephenson paper above, the presence of the flux plate(s) presents one or more paths for the flux alongside and generally parallel to the main flux path of the stator and rotor, thus reducing the reluctance of the magnetic circuit and reducing the current required to support a given level of flux, thereby enhancing performance of the machine. The flux plates effectively form part of the main magnetic circuit, taking advantage of the otherwise unused axial space between the winding overhangs and the pole ends. The amount of flux flowing in the flux plate(s) will depend on the frequency of excitation. At zero frequency, the amount of flux in the plates is a maximum, but as the frequency rises eddy currents in the plates will gradually reduce the flux, so that, at the higher frequencies used for operation at high speeds, the plates effectively carry no flux.

Conventional wisdom would suggest that there would be an unacceptable loss associated with the eddy currents flowing in the flux plates which would make the invention technically undesirable. However, for many applications, the increase in frequency is associated with a reduction in torque and flux. As a consequence, the main magnetic circuit is no longer saturated and the presence of relatively small eddy currents will tend to exclude most of the flux from the flux plates.

While the preferred arrangement is to have flux plates at each end of the stator and rotor, a particular design specification may not give enough space for all of these to be fitted. In this case, one or more plates may be omitted, since there is still some benefit in having one plate on its own. For example, Figure 6 shows an arrangement with one rotor flux plate 64 and two stator plates 50. Equally possibly, the assembly could have two rotor flux plates and one or two stator flux plates.

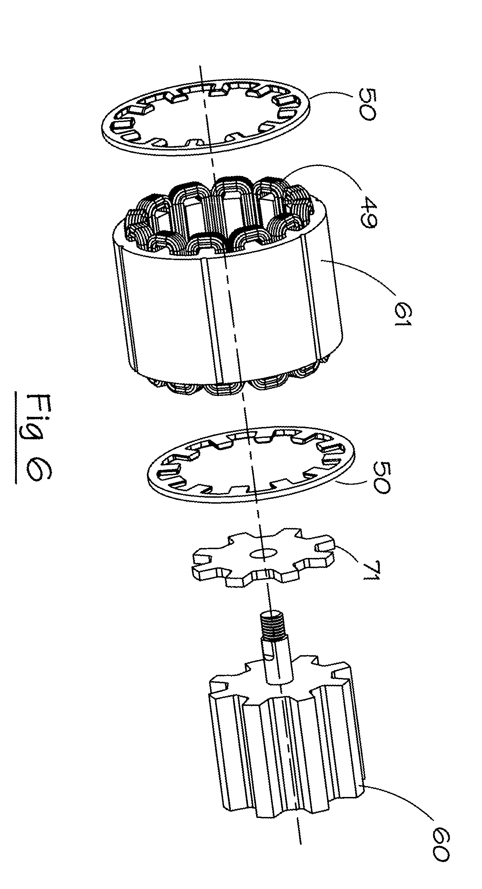

Figure 8 shows a motor, similar to that shown in Figure 3, fitted with stator flux plates 82, 84 and a rotor flux plate 85. The lower view shows that the stator flux plates are adjacent the axial ends of the stator 42 and virtually fill the gaps in the axial direction under the coil overhang 46 embracing a pole. The section A-A shows that, in this example, the stator flux plates 82, 84 define a margin 86/87 with respect to both the inner and outer profiles of the stator core, while the rotor flux plate only has a margin 88 with respect to the rotor core at the pole faces.

It is possible to omit the corner radius of the tooth of the stator flux plate, which mates with the inner radius of the coil overhang. This means that the stator flux plate can be manufactured as a simple stamping from a flat plate. Although this simplifies manufacturing, it prevents the stator flux plate mating closely with the profile of the winding and therefore does not optimise the use of the space. As an alternative, the shape of each tooth of the stator flux plate can be arranged with a rectangular shape. This would extend across the width of the pole but not outwardly fully into the axial extent of the overhang.

A further variant is to make the flux plate from a series of stampings, each of which is a sector of the full plate. In this case the gap between the adjacent stampings should preferably be controlled so that it is smaller than the main airgap length between the teeth of the rotor and stator flux plates.

Instead of producing a unitary stamping made from a suitable magnetically permeable material, it is possible to build either plate from a series of laminations. In the case of the stator flux plate having shaped projections, this is done using a smart die. These successive laminations have a geometry with reducing tooth width, so that the profile of the series approximates to the corner radii of the coil ends. Such a laminated flux plate has the additional benefit that it will function up to the same frequencies as the main lamination stack.

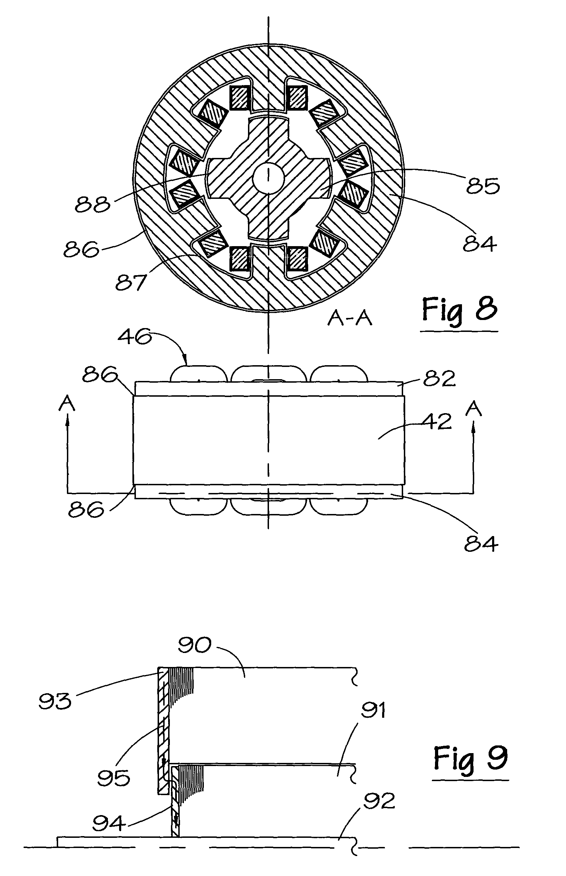

One further alternative embodiment of the invention has a stator flux plate whose teeth extend radially past the main working airgap of the machine. The teeth of the stator flux plate at one end of the core are, thus, extended so that an axial component of the flux path is defined from the tooth on the stator flux plate into the tooth on the rotor flux plate. This leads to a torque produced by the axial flux component. Flux from the stator flux plate passes axially into the rotor flux plate. This is illustrated in Figure 9, which shows a partial cross-section of a machine. The laminated rotor core 91 is mounted on a shaft 92 and has a flux plate 94. The laminated stator core 90 has a flux plate 93 which extends radially beyond the flux plate 94 so that one flux plate radially overlaps the other. The broken line 95 shows schematically the flux path alongside that of the stator and rotor, passing radially down the stator flux plate, axially across a small gap separating the flux plates and then radially down the rotor flux plate.

An additional benefit of the stator flux plate is that the radial projections extending inside the coil overhangs provide heat paths from the inner face of the end of the coil to the stator outer diameter. This provides a means of improving the cooling of electric machines which are cooled by extracting heat from the outer diameter.

The skilled person will appreciate that variations of the disclosed arrangements are possible without departing from the invention, particularly in the details of the shape of the flux plates. Machines with different number of rotor and/or stator poles are equally responsive to the benefits of the invention. Likewise, the invention is applicable to an equivalent linear machine in which the 'rotor' is the moving part on a fixed stator. In this case the flux plates are arranged on the lateral ends of the poles relative to the longitudinal direction of travel. Accordingly, the above description of several embodiments is made by way of example and not for the purposes of limitation. It will be clear to the skilled person that minor modifications can be made to the design without significant changes to the operation described above. The present invention is intended to be limited only by the scope of the following claims.

## Claims

1. A stator for an electrical machine, comprising a core defining at least one stator pole having end faces, and at least one coil embracing the at least one stator pole, a surface of the coil and at least one of the end faces defining a space, the stator further comprising a magnetisable flux plate having a projecting portion at least partially occupying the space.

2. A stator as claimed in claim 1 in which the said projecting portion substantially fills the said space.

3. A stator as claimed in claim 1 or 2 in which the said projecting portion has a profile generally conforming to the profile of the pole when viewed along the axis of the core.

4. A stator as claimed in claim 3, the flux plate having a profile that is coincident with the profile of the stator core.

5. A stator as claimed in claim 3, the flux plate having a profile that lies inside the profile of the stator core at least in the region of the pole.

6. A stator as claimed in any of claims 1-5 in which the said surface of the coil partially defining the said space includes a bend in the coil.

7. A stator as claimed in any preceding claim in which the core is laminated, the thickness of the flux plate perpendicular to the plane of lamination being greater than that of each lamination.

8. A stator as claimed in claim 7 in which the thickness of the flux plate is between 3 and 10 times the thickness of the lamination.

9. A stator as claimed in any of claims 1-9 in which the flux plate is a unitary item.

10. An electrical machine assembly comprising a movable member arranged to move relative to the stator, and a stator as claimed in any of claims 1 to 10.

11. An assembly as claimed in claim 10 in which the movable member comprises laminations, a movable member flux plate being mounted adjacent an outer lamination of the movable member and having a profile that is similar to that of the profile of the movable member.

12. An assembly as claimed in claim 11 in which the thickness of the movable member flux plate perpendicular to the plane of lamination is greater than that of each of the laminations.

13. An assembly as claimed in claim 11 or 12 in which the profile of the movable member flux plate lies inside the profile of the movable member.

14. An assembly as claimed in any of claims 11-13 constructed and arranged as a rotary machine in which the movable member is a rotor.

15. An assembly as claimed in claim 14, in which the flux plate on at least one end of at least one of the stator and rotor, extends radially beyond the other of the stator and rotor.

16. An assembly as claimed in any of claims 11-15 in which the movable member flux plate is a unitary item.

17. An assembly as claimed in any of claims 11-16 in which the thickness of the movable member flux plate is between 3 and 10 times the thickness of each lamination.

18. An assembly as claimed in any of claims 11-17 constructed and arranged to run as a variable reluctance machine.

19. An assembly as claimed in any of claims 11 to 18 in which the stator flux plate and/or the movable member flux plate is/are arranged, in use, to carry flux alongside a flux path through the stator core and the movable member.

20. A flux plate made of magnetisable material for an electrical machine defining salient poles extending from a body portion, the surface of the flux plate on one side being flat, the surface of the flux plate on the other side having radiused edges in the region of the pole sides.

21. A flux plate as claimed in claim 20 in which the salient poles extend radially inwardly from the body portion.

22. A flux plate as claimed in claim 20 or claim 21 made as a unitary item.

23. A method of increasing the flux carrying capacity of an electrical machine which comprises a stator made of laminations of magnetisable material of a first thickness, and a rotor made of laminations of magnetisable material of a second thickness, the method comprising:
arranging at least one magnetisable flux plate against the laminations of one or both of the stator and rotor, which flux plate has a profile which is similar to the lamination against which it is arranged, and has a thickness which is greater than that of the lamination, the flux plate being arranged to carry flux alongside the flux path through the rotor and stator.

24. A method as claimed in claim 23 in which the stator comprises a core defining at least one stator pole having end faces, and at least one coil embracing the at least one stator pole, the method further comprising at least partially occupying a space between a surface of the coil and at least one of the end faces with a projecting portion of the flux plate.

25. A method as claimed in any of claim 23 or 24 in which the flux plates are arranged adjacent laminations of the stator and rotor, the method further comprising aligning the flux plates so that the flux carried by the flux plates is in parallel with the flux through the rotor and stator.

26. A method as claimed in claim 23 or 24 in which the flux plates are arranged adjacent laminations of the stator and rotor, the method further comprising arranging one of the flux plates to overlap the other.
